# EUROPÄISCHE PATENTSCHRIFT

(11) **EP 3 762 690 B1**
(45) Veröffentlichungstag und Bekanntmachung des Hinweises auf die Patenterteilung: **22.03.2023**
(21) Anmeldenummer: 19705510.6
(22) Anmeldetag: 15.02.2019
(51) Int. Cl.: G01F 23/263

(54) **BETRIEBSFLÜSSIGKEITSBEHÄLTER MIT KAPAZITIVER ERFASSUNG VON FÜLLSTÄNDEN**
OPERATING LIQUID CONTAINER WITH CAPACITIVE LEVEL DETECTION
RÉCIPIENT DE LIQUIDE DE SERVICE AVEC DÉTECTION DE NIVEAU CAPACITIF

(30) Priorität: 09.03.2018 DE 102018203633
(43) Veröffentlichungstag der Anmeldung: 13.01.2021
(73) Patentinhaber: Kautex Textron GmbH & Co. KG, 53229 Bonn (DE)
(72) Erfinder: WIND, Stefan, 53773 Hennef (DE); BARKOW, Axel, 50354 Hürth (DE)
(74) Vertreter: Richly & Ritschel Patentanwälte PartG mbB
(86) Internationale Anmeldenummer: PCT/EP2019/053794
(87) Internationale Veröffentlichungsnummer: WO 2019/170392

(56) Entgegenhaltungen:
- DE-A1-102006 005 529
- DE-A1-102008 001 100
- DE-A1-102009 000 611
- DE-A1-102015 200 691
- DE-A1-102015 203 744
- US-A1- 2006 103 393

## Beschreibung

Die vorliegende Erfindung betrifft einen Betriebsflüssigkeitsbehälter mit einer kapazitiven Messeinrichtung zur Bestimmung eines Füllgrades des Betriebsflüssigkeitsbehälters.

Im Folgenden wird auch auf als Kraftstoffbehälter (für Ottokraftstoffe oder Dieselkraftstoffe) ausgebildete Betriebsflüssigkeitsbehälter Bezug genommen, die für den Einsatz in einem Kraftfahrzeug ausgebildet sind. Betriebsflüssigkeitsbehälter im Sinne der Erfindung sind insbesondere aber nicht ausschließlich Kraftstoffbehälter für Kraftfahrzeuge, Harnstoffbehälter zur Bevorratung von in einen Abgasstrang zu injizierenden Harnstoff, Wasserbehälter zur Bevorratung von in Brennräume einer Brennkraftmaschine zu injizierendes Wasser, Wischwasserbehälter, Ölbehälter, Nebenflüssigkeitsbehälter oder Additivbehälter für Kraftfahrzeuge. Behälter der eingangs genannten Art werden häufig durch Extrusionsblasformen hergestellt, wobei sich insbesondere HDPE (High Density Polyethylene) für die Herstellung extrusionsblasgeformter Behälter eignet. Ferner ist es möglich, entsprechende Betriebsflüssigkeitsbehälter mittels eines Spritzgießverfahrens herzustellen.

Aus dem Stand der Technik sind Betriebsflüssigkeitsbehälter bekannt, deren Füllstände mittels Hebelgeber ermittelt werden, die jeweils einen auf der Betriebsflüssigkeit aufschwimmenden Schwimmkörper aufweisen. Entsprechende Hebelgeber benötigen relativ viel Bauraum innerhalb des Betriebsflüssigkeitsbehälters. Ferner sind entsprechende Hebelgeber störanfällig, insbesondere, wenn diese in Betriebsflüssigkeitsbehältern eingesetzt werden, die zur Aufnahme einer wässrigen Lösung ausgebildet sind. So friert wässrige Harnstofflösung, die zur Entstickung von Abgasen in den Abgasstrang injiziert wird, bei einer Temperatur unterhalb von -11°C ein, so dass im Fahrbetrieb Eisbrocken gegen den Hebelgeber und dessen Bauteile prallen und diese beschädigen können.

Um dieses Problem zu lösen, sind aus dem Stand der Technik kapazitive Füllstandsensoren bekannt. Mittels eines kapazitiven Füllstandsensors ist der Füllstand eines Betriebsflüssigkeitsbehälters berührungslos mittels Kondensatoren bestimmbar. Die DE 10 2010 011 638 A1 beschreibt einen kapazitiven Füllstandsensor, der eine erste und eine zweite langgestreckte Levelelektrode aufweist, die jeweils an einer Außenseite eines Flüssigkeitsbehälters in einer ersten Richtung parallel zueinander angeordnet sind, in der sich ein Füllstand des Flüssigkeitsbehälters ändert. Ferner weist der Füllstandsensor eine erste und eine zweite langgestreckte Referenzelektrode auf, die in einer zweiten Richtung parallel zueinander an der Außenseite des Flüssigkeitsbehälters angeordnet sind, wobei die zweite Richtung entlang eines Bodens des Flüssigkeitsbehälters verläuft. Der in der DE 10 2010 011 638 A1 beschriebene kapazitive Füllstandsensor weist ferner eine Auswerteeinheit auf, die mit den zwei Levelelektroden und mit den zwei Referenzelektroden verbunden ist, und die zur Ermittlung eines Füllstandes einer Flüssigkeit in einem Inneren des Flüssigkeitsbehälters mittels Signalen von den Levelelektroden ausgebildet ist.

In diesem Zusammenhang sind aus der DE 10 2008 001 100 A1 eine kapazitive Messsonde und ein Verfahren zum Herstellen einer kapazitiven Messsonde bekannt. Die kapazitive Messsonde weist zwei Elektroden und eine Kunststoff-Ummantelung, die die beiden Elektroden einkapselt, auf. Die Kunststoff-Ummantelung weist wenigstens einen Abschnitt aus einem leitfähigen Kunststoff auf, der elektrisch mit einer der beiden Elektroden verbunden ist.

Zusätzlich ist aus dem Dokument DE 10 2015 200 691 A1 ein Behälter bekannt, der einen Behälterkörper zur Aufnahme einer Flüssigkeit, vorzugsweise einer Betriebsflüssigkeit für ein Fahrzeug, und eine Füllstanderfassungsanordnung zum Erfassen eines Füllstands der Flüssigkeit in dem Behälterkörper umfasst, wobei der Behälter eine von der Füllstanderfassungsanordnung verschiedene Flüssigkeitseigenschaftsermittlungsanordnung zum Ermitteln einer von dem Füllstand verschiedenen Eigenschaft der Flüssigkeit in dem Behälterkörper umfasst. Die Flüssigkeitseigenschaftsermittlungsanordnung weist eine in Abhängigkeit der zu ermittelnden Eigenschaft der Flüssigkeit veränderliche elektrische Impedanz aufweist.

Dokument DE 10 2006 005 529 A1 betrifft einen Kunststoffbehälter umfassend einen Behälterkörper und eine elektrisch leitende Elektrodeneinrichtung, welche an dem Behälterkörper derart angeordnet ist, dass zumindest ein Abschnitt der elektrisch leitenden Elektrodeneinrichtung zur Kontaktierung durch in den Behälterkörper eingefülltes oder einfüllbares Material im Inneren des Behälterkörpers freiliegt. Die elektrisch leitende Elektrodeneinrichtung ist zumindest abschnittsweise aus elektrisch leitfähigem Kunststoff gebildet.

Die DE 10 2015 203 744 A1 betrifft ein wasserführendes Haushaltsgerät umfassend einen Behälter zur Bevorratung eines Verbrauchsstoffes mit Wandungen des Behälters, wobei die Wandungen elektrisch leitfähige Platten mit elektrischen Anschlüssen umfassen, und eine Elektronik zur Signalerfassung, insbesondere zur Erfassung eines Füllstands. Die Wandungen umfassen leitfähigen Kunststoff als Platten.

Dokument DE 10 2009 000611 A1 betrifft eine kapazitive Messsonde mit einer Innenelektrode, einer Außenelektrode, welche sich zumindest entlang eines Messbereichs der kapazitiven Messsonde erstreckt und die Innenelektrode zumindest teilweise umgibt; und einer elektrisch isolierenden Außenbeschichtung, welche eine sich entlang dem Messbereich erstreckende Außenfläche der Au-ßenelektrode vollständig abdeckt. Die kapazitive Messsonde weist zusätzlich eine zwischen der Innenelektrode und der Außenelektrode angeordnete elektrisch isolierende Zwischenisolierung und einen an der Innenelektrode angeordneten, von der Außenbeschichtung und der Zwischenisolierung zumindest teilweise freiliegenden leitfähigen Kontakt, welcher als leitfähige Verbindung zwischen der Innenelektrode und einem Außenvolumen des Messbereichs ausgebildet ist, auf. Des Weiteren betrifft das Dokument einen Füllstandssensor mit einer kapazitiven Messsonde.

Aus der US 2006 103393 A1 ist eine Sensorvorrichtung zur Durchführung mindestens einer Bestimmung bezüglich einer ausgewählten Eigenschaft eines Fluids bekannt, die einen Trägerpfosten umfasst, der dem Fluid ausgesetzt werden kann. Ein Kondensator hat Elektroden, die in der Nähe eines Endes des Stützpfostens gehalten werden. Ein Gehäuse zur Aufnahme von Elektronik wird in der Nähe eines gegenüberliegenden Endes des Stützpfostens gehalten. In einer Anordnung wird ein Füllstandssensorelement, wie z. B. ein leitfähiger Polymerstab, zumindest teilweise von dem Trägerpfosten getragen. Ein Montageverfahren umfasst das Umspritzen von Teilen der Vorrichtung auf andere Teile, um stabile und sichere Verbindungen zwischen den verschiedenen Teilen der Baugruppe herzustellen.

Der vorliegenden Erfindung liegt die Aufgabe zugrunde, einen Betriebsflüssigkeitsbehälter mit einem Füllstanderfassungssystem bereitzustellen, das eine verbesserte Genauigkeit hinsichtlich der Bestimmung des Füllstandes des Betriebsflüssigkeitsbehälters aufweist und das vereinfacht herstellbar ist.

Die der vorliegenden Erfindung zugrundeliegende Aufgabe wird durch einen Betriebsflüssigkeitsbehälter mit den Merkmalen des Anspruchs 1 gelöst. Vorteilhafte Ausgestaltungen des Betriebsflüssigkeitsbehälters sind in den von Anspruch 1 abhängigen Ansprüchen beschrieben.

Der vorliegenden Erfindung liegt somit ein Betriebsflüssigkeitsbehälter zugrunde, der einen Kondensator mit einer ersten Elektrode und einer zweiten Elektrode aufweist, wobei zwischen der ersten Elektrode und der zweiten Elektrode ein Freiraum gebildet ist, der mit einem Betriebsflüssigkeitsbehälterinnenraum fluidverbunden ist. Der Betriebsflüssigkeitsbehälter weist ferner eine mit dem Kondensator elektrisch verbundene Auswerteeinrichtung auf, die zur Bestimmung einer Kapazität des Kondensators mittels von dem Kondensator ermittelten Messsignalen ausgebildet ist. Die erste Elektrode und die zweite Elektrode weisen einen elektrisch leitfähigen Kunststoff auf.

Durch Bestimmung der Kapazität des Kondensators kann aufgrund der bekannten Geometrie des Kondensators die Dielektrizitätkonstate zwischen den Elektroden des Kondensators bestimmt werden.

Somit lässt sich bei bekannter Betriebsflüssigkeit bzw. bekannter Dielektrizitätskonstante der eingefüllten Betriebsflüssigkeit der Füllstand des Betriebsflüssigkeitsbehälterinnenraums bestimmen. In diesem Fall ist die Auswerteeinrichtung dazu ausgebildet, einen Füllstand des Betriebsflüssigkeitsbehälterinnenraums zu bestimmen.

Ferner lässt sich bei bekannter Betriebsflüssigkeit bzw. bekannter Dielektrizitätskonstante der eingefüllten Betriebsflüssigkeit der Aggregatzustand der Betriebsflüssigkeit bestimmen. In diesem Fall ist die Auswerteeinrichtung dazu ausgebildet, einen Aggregatzustand der im Betriebsflüssigkeitsbehälterinnenraum befindlichen Betriebsflüssigkeit zu bestimmen.

Ferner lässt sich bei bekanntem Füllstand des Betriebsflüssigkeitsbehälters auf eine Qualitätseigenschaft der Betriebsflüssigkeit zurückschließen, da die Dielektrizitätskonstante von der Zusammensetzung der Betriebsflüssigkeit abhängig ist. In diesem Fall ist die Auswerteeinrichtung dazu ausgebildet, eine Qualitätseigenschaft der im Betriebsflüssigkeitsbehälterinnenraum befindlichen Betriebsflüssigkeit zu bestimmen.

Der erfindungsgemäße Betriebsflüssigkeitsbehälter weist eine erhöhte Bestimmungsgenauigkeit hinsichtlich der Ermittlung der Kapazität des Kondensators auf. Insbesondere weist der erfindungsgemäße Betriebsflüssigkeitsbehälter weist eine erhöhte Bestimmungsgenauigkeit hinsichtlich der Ermittlung dessen Füllstandes auf. Denn aufgrund der Positionierung der ersten Elektrode und der zweiten Elektrode im Betriebsflüssigkeitsbehälterinnenraum beziehungsweise in einem mit dem Betriebsflüssigkeitsbehälterinnenraum fluidverbundenen Bereich des Betriebsflüssigkeitsbehälters weisen die erste Elektrode und die zweite Elektrode des Kondensators einen verminderten Abstand zur Betriebsflüssigkeit auf. Daher wechselwirkt ein zwischen der ersten Elektrode und der zweiten Elektrode des Kondensators befindliches elektrisches Feld weniger mit dem Material des Betriebsflüssigkeitsbehälters und mehr mit der im Betriebsflüssigkeitsbehälterinnenraum befindlichen Betriebsflüssigkeit. Da der Kondensator zu jedem Betriebszeitpunkt in unmittelbarer Nähe der Betriebsflüssigkeit ist und mit dieser vorzugsweise in direktem Kontakt steht, ist die ermittelte Kapazität des Kondensators lediglich vom Füllstand abhängig. Somit kann, bei bekannter Elektrodengeometrie und bekannter dielektrischen Leitfähigkeit der Betriebsflüssigkeit im Betriebsflüssigkeitsbehälterinnenraum direkt aus der ermittelten bzw. gemessenen Kapazität des Kondensators der Füllstand des Betriebsflüssigkeitsbehälters oder der Füllstand in einem in den Betriebsflüssigkeitsbehälterinnenraum mündenden Einfüllrohr bestimmt werden.

Die ermittelte Kapazität des Kondensators wird durch die Auswerteeinrichtung zur Bestimmung des Füllstandes des Betriebsflüssigkeitsbehälterinnenraums verwendet. Denn umso höher der Füllstand im Betriebsflüssigkeitsbehälterinnenraum beziehungsweise im Einfüllrohr ist, desto mehr Betriebsflüssigkeit wird von dem elektrischen Feld zwischen der ersten Elektrode und der zweiten Elektrode des Kondensators durchdrungen. Die Kapazität C des Kondensators ist proportional zur Fläche A der Elektroden und zur Dielektrizitätskonstanten εᵣ des Trennmediums, als der Betriebsflüssigkeit. Ferner ist die Kapazität C umgekehrt proportional zum Abstand d der Elektroden des Kondensators zueinander. Die Kapazität C des Kondensators berechnet sich nach folgender Formel: C = ε₀ ∗ εᵣ ∗ A/d

Ein weiterer Vorteil des erfindungsgemäßen Betriebsflüssigkeitsbehälters ist, dass dieser eine erhöhte Langzeitstabilität aufweist. Denn der Kunststoff der ersten Elektrode und der zweiten Elektrode unterliegt keiner Korrosion.

Der Betriebsflüssigkeitsbehälter ist insbesondere als Betriebsflüssigkeitsbehälter für ein Kraftfahrzeug ausgebildet.

Der Betriebsflüssigkeitsbehälter ist zur Aufnahme und Bevorratung einer Betriebsflüssigkeit ausgebildet.

Die erste Elektrode des Kondensators ist von der zweiten Elektrode des Kondensators elektrisch getrennt, so dass kein elektrischer Kurzschluss zwischen der ersten Elektrode und der zweiten Elektrode ermöglicht ist.

Die erste Elektrode und/oder die zweite Elektrode weisen eine Schicht aus dem elektrisch leitfähigen Kunststoff auf.

Vorzugsweise ist der Freiraum zwischen der ersten Elektrode und der zweiten Elektrode in Abhängigkeit eines Füllstandes des Betriebsflüssigkeitsbehälterinnenraums mit Betriebsflüssigkeit gefüllt.

Die Auswerteeinrichtung ist als elektronische Auswerteeinrichtung ausgebildet. Die Auswerteeinrichtung ist sowohl mit der ersten Elektrode als auch mit der zweiten Elektrode des Kondensators elektrisch verbunden. Die elektrische Verbindung der Auswerteeinrichtung mit der ersten Elektrode und der zweiten Elektrode ist vorzugsweise mittels Drähten oder mittels Leiterbahnen realisiert.

Die dielektrische Leitfähigkeit der Betriebsflüssigkeit kann auch als Permittivität der Betriebsflüssigkeit bezeichnet werden.

Vorzugsweise ist der Betriebsflüssigkeitsbehälter derart ausgebildet, dass die erste Elektrode und die zweite Elektrode des Kondensators jeweils plan ausgebildet. Weiter vorzugsweise sind die erste Elektrode und die zweite Elektrode derart zueinander angeordnet, dass Seitenkanten der ersten Elektrode und der zweiten Elektrode einander gegenüberliegend und einander zu gerichtet sind.

Vorzugsweise ist der Betriebsflüssigkeitsbehälter derart ausgebildet, dass die erste Elektrode und/oder die zweite Elektrode einen Kunststoff aufweist beziehungsweise aufweisen, in dem elektrisch leitfähige Partikel dispergiert sind.

Das Merkmal, gemäß dem die erste Elektrode und/oder die zweite Elektrode einen Kunststoff aufweisen, in dem elektrisch leitfähige Partikel dispergiert sind, kann auch so ausgedrückt werden, dass die erste Elektrode und/oder die zweite Elektrode einen Kunststoff aufweisen, der mit elektrisch leitfähigen Partikeln gefüllt ist.

Die elektrisch leitfähigen Partikel sind vorzugsweise Metallpartikel, beispielsweise in Form von Metallpulvern. Als Metall können Eisen, Aluminium, Kupfer, Zinn, Zink, Nickel, Silber, Gold, Platin und Legierungen dieser Metalle, beispielsweise Messing, verwendet werden. Beschränkungen hinsichtlich der Auswahl des Metallmaterials bestehen keine.

Der Kunststoff, in dem das Metallpulver dispergiert ist, ist vorzugsweise Polyethylen hoher Dichte (HDPE). Weiter vorzugsweise ist der Kunststoff Polyoxymethylen (POM). Weiter vorzugsweise ist der Kunststoff Polyamid (PA). Weiter vorzugsweise ist der Kunststoff Polypropylen (PP). Beschränkunken hinsichtlich der Auswahl des Kunststoffmaterials bestehen keine.

Weiter vorzugsweise ist der Betriebsflüssigkeitsbehälter derart ausgebildet, dass die elektrisch leitfähigen Partikel leitfähige Rußpartikel aufweisen.

Weiter vorzugsweise ist der Betriebsflüssigkeitsbehälter derart ausgebildet, dass der elektrisch leitfähige Kunststoff der ersten Elektrode und/oder der zweiten Elektrode Polyethylen hoher Dichte aufweist, in dem die elektrisch leitfähigen Partikel dispergiert sind.

Ein entsprechend ausgebildeter Betriebsflüssigkeitsbehälter ist besonders einfach und kostengünstig herstellbar. Denn bei einem aus Kunststoff gefertigten Betriebsflüssigkeitsbehälter weist dieser vorzugsweise eine Behälterwand auf, die ebenfalls Polyethylen hoher Dichte aufweist, so dass die Elektroden des Kondensators zusammen mit der Behälterwand in einem Extrusionsblasprozess oder in einem Spritzgussprozess herstellbar sind.

Erfindungsgemäß ist der Betriebsflüssigkeitsbehälter derart ausgebildet, dass die erste Elektrode mehrschichtig ausgebildet ist, wobei eine Elektroden-Schicht der ersten Elektrode, die an den Freiraum des Kondensators grenzt, aus dem elektrisch leitfähigen Kunststoff gebildet ist.

Weiter vorzugsweise ist der Betriebsflüssigkeitsbehälter derart ausgebildet, dass die erste Elektrode eine Außenschicht, eine an die Außenschicht angrenzende Rezyklat-Schicht, eine an die Rezyklat-Schicht angrenzende erste Haftvermittlerschicht, eine an die erste Haftvermittlerschicht angrenzende Barriereschicht, eine an die Barriereschicht angrenzende zweite Haftvermittlerschicht und die Elektroden-Schicht aufweist, wobei die Elektroden-Schicht an die zweite Haftvermittlerschicht angrenzt.

Die Außenschicht besteht vorzugsweise aus Polyethylen hoher Dichte (HDPE; Englisch: High Density Polyethylen).

Die Rezyklatschicht besteht aus einer Mischung der Schichtmaterialien der Betriebsflüssigkeitsbehälterwand.

Die erste und die zweite Haftvermittlerschicht bestehen vorzugsweise aus Polyethylen niederer Dichte (LDPE; Englisch: Low Density Polyethylen).

Die Barriereschicht besteht vorzugsweise aus Ethylen-Vinylalkohohl-Copolymer (EVOH).

Die Elektroden-Schicht ist vorzugsweise als Außenschicht ausgebildet und grenzt an den Freiraum des Kondensators.

Weiter vorzugsweise ist der Betriebsflüssigkeitsbehälter derart ausgebildet, dass die zweite Elektrode mehrschichtig ausgebildet ist, wobei eine Elektroden-Schicht der zweiten Elektrode, die an den Freiraum des Kondensators grenzt, aus dem elektrisch leitfähigen Kunststoff gebildet ist.

Weiter vorzugsweise ist der Betriebsflüssigkeitsbehälter derart ausgebildet, dass die zweite Elektrode eine Außenschicht, eine an die Außenschicht angrenzende Rezyklat-Schicht, eine an die Rezyklat-Schicht angrenzende erste Haftvermittlerschicht, eine an die erste Haftvermittlerschicht angrenzende Barriereschicht, eine an die Barriereschicht angrenzende zweite Haftvermittlerschicht und die Elektrodenschicht aufweist, wobei die Elektroden-Schicht an die zweite Haftvermittlerschicht angrenzt.

Die Außenschicht besteht vorzugsweise aus Polyethylen hoher Dichte (HDPE; Englisch: High Density Polyethylen).

Die Rezyklatschicht besteht aus einer Mischung der Schichtmaterialien der Betriebsflüssigkeitsbehälterwand.

Die erste und die zweite Haftvermittlerschicht bestehen vorzugsweise aus Polyethylen niederer Dichte (LDPE; Englisch: Low Density Polyethylen).

Die Barriereschicht besteht vorzugsweise aus Ethylen-Vinylalkohohl-Copolymer (EVOH).

Die Elektroden-Schicht ist vorzugsweise als Außenschicht ausgebildet und grenzt an den Freiraum des Kondensators.

Weiter vorzugsweise ist der Betriebsflüssigkeitsbehälter derart ausgebildet, dass der Kondensator mit einer Behälterwand des Betriebsflüssigkeitsbehälters verbunden ist.

Ein entsprechend ausgebildeter Betriebsflüssigkeitsbehälter ist besonders einfach und kostengünstig herstellbar. Denn die Elektroden des Kondensators können zusammen mit der Behälterwand in einem Extrusionsblasprozess oder in einem Spritzgussprozess hergestellt werden. Ferner können die Elektroden nach dem Fertigungsprozess der Behälterwände mit diesen in einem weiteren Verfahrensschritt verbunden, insbesondere verschweißt werden.

Die Behälterwand ist vorzugsweise eine Seitenwand des Betriebsflüssigkeitsbehälters. Weiter vorzugsweise ist die Behälterwand eine Bodenwand des Betriebsflüssigkeitsbehälters. Weiter vorzugsweise ist die Behälterwand eine Deckenwand des Betriebsflüssigkeitsbehälters.

In Einbaulage des Betriebsflüssigkeitsbehälters, d.h. bei horizontaler Ausrichtung des Betriebsflüssigkeitsbehälters, weisen die erste Elektrode und die zweite Elektrode vertikale Erstreckungskomponenten auf. Vorzugsweise verlaufen Längserstreckungsrichtungen der ersten Elektrode und der zweiten Elektrode in Einbaulage des Betriebsflüssigkeitsbehälters vertikal oder weisen zumindest eine vertikale Erstreckungskomponente auf.

Bei der Verbindung des Kondensators mit der Behälterwand sind die erste Elektrode und die zweite Elektrode derart mit der Behälterwand verbunden, das in einem Verbindungsbereich der ersten Elektrode bzw. der zweiten Elektrode mit der Behälterwand die erste Elektrode bzw. die zweite Elektrode von der Behälterwand elektrisch isoliert ist. Beispielsweise ist zwischen der ersten Elektrode bzw. der zweiten Elektrode und der Behälterwand ein elektrisch isolierender, d. h. elektrisch nicht leitender Kunststoff angeordnet. Eine entsprechende Verbindung ist beispielsweise über einer Verschweißung ermöglicht.

Weiter vorzugsweise ist der Betriebsflüssigkeitsbehälter derart ausgebildet, dass zumindest ein Teil einer Behälterwand des Betriebsflüssigkeitsbehälters als erste Elektrode und/oder als zweite Elektrode ausgebildet ist.

Die Behälterwand ist vorzugsweise eine Seitenwand des Betriebsflüssigkeitsbehälters. Weiter vorzugsweise ist die Behälterwand eine Bodenwand des Betriebsflüssigkeitsbehälters. Weiter vorzugsweise ist die Behälterwand eine Deckenwand des Betriebsflüssigkeitsbehälters.

In Einbaulage des Betriebsflüssigkeitsbehälters, d.h. bei horizontaler Ausrichtung des Betriebsflüssigkeitsbehälters, weisen die erste Elektrode und die zweite Elektrode vertikale Erstreckungskomponenten auf. Vorzugsweise verlaufen Längserstreckungsrichtungen der ersten Elektrode und der zweiten Elektrode in Einbaulage des Betriebsflüssigkeitsbehälters vertikal oder weisen zumindest eine vertikale Erstreckungskomponente auf.

Weiter vorzugsweise ist der Betriebsflüssigkeitsbehälter derart ausgebildet, dass die Behälterwand eine Außenwand ist und die erste Elektrode und/oder die zweite Elektrode dem Betriebsflüssigkeitsbehälterinnenraum zugewandt ist.

Weiter vorzugsweise ist der Betriebsflüssigkeitsbehälter derart ausgebildet, dass die erste Elektrode als erster Teilhohlzylinder und/oder die zweite Elektrode als zweiter Teilhohlzylinder ausgebildet ist/sind.

Weiter vorzugsweise ist der Betriebsflüssigkeitsbehälter derart ausgebildet, dass der erste Teilhohlzylinder über dessen Längskanten mit der zweiten Elektrode unter Ausbildung des Freiraums verbunden ist, wobei der Freiraum als Hohlraum ausgebildet ist, wobei der erste Teilhohlzylinder mit der zweiten Elektrode mittels eines elektrisch isolierenden Kunststoffs verbunden ist, wobei der elektrisch isolierende Kunststoff vorzugsweise Polyethylen hoher Dichte (HDPE) aufweist.

Vorzugsweise sind die erste Elektrode als erster Teilhohlzylinder und die zweite Elektrode als zweiter Teilhohlzylinder ausgebildet. Dabei ist der erste Teilhohlzylinder über dessen Längskanten mit Längskanten des zweiten Teilhohlzylinders unter Ausbildung des Freiraums verbunden, wobei der Freiraum als Hohlraum ausgebildet ist, wobei zwischen den Längskanten des ersten Teilhohlzylinders und den Längskanten des zweiten Teilhohlzylinders jeweils ein elektrisch isolierender Kunststoff angeordnet ist.

Weiter vorzugsweise ist der Betriebsflüssigkeitsbehälter derart ausgebildet, dass der Betriebsflüssigkeitsbehälter einen mit dem Betriebsflüssigkeitsbehälterinnenraum fluidverbundenen Stautopf aufweist, der mit einem Behälterboden des Betriebsflüssigkeitsbehälters verbunden ist, wobei zumindest ein Teil einer Wand des Stautopfes als erste Elektrode und/oder als zweite Elektrode ausgebildet ist.

Weiter vorzugsweise ist der Betriebsflüssigkeitsbehälter derart ausgebildet, dass der Betriebsflüssigkeitsbehälterinnenraum über ein in diesen mündendes Einfüllrohr mit Betriebsflüssigkeit befüllbar ist, wobei das Einfüllrohr als der Kondensator ausgebildet ist, wobei die erste Elektrode als erster Teilhohlzylinder und die zweite Elektrode als zweiter Teilhohlzylinder ausgebildet sind. Dabei ist der erste Teilhohlzylinder über dessen Längskanten mit Längskanten des zweiten Teilhohlzylinders unter Ausbildung des Freiraums verbunden, wobei der Freiraum als Hohlraum ausgebildet ist, wobei zwischen den Längskanten des ersten Teilhohlzylinders und den Längskanten des zweiten Teilhohlzylinders jeweils ein elektrisch isolierender Kunststoff angeordnet ist.

Folglich ist das Einfüllrohr derart ausgebildet, dass der erste Teilhohlzylinder, der zweite Teilhohlzylinder und elektrisch isolierende Kunststoff zwischen den jeweiligen Längskanten des ersten Teilhohlzylinders und des zweiten Teilhohlzylinders einstückig ausgebildet sind. Hierzu ist zur Herstellung eines entsprechenden Einfüllrohrs ein Extrusionskopf zum Extrudieren des Einfüllrohrs entsprechend ausgebildet, so dass das Einfüllrohr direkt einstückig aus dem Extrusionskopf extrudiert werden kann.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine stark vereinfachte räumliche Darstellung eines erfindungsgemäßen Betriebsflüssigkeitsbehälters gemäß einer ersten Ausführungsform der vorliegenden Erfindung;
- Figur 2:: eine stark vereinfachte Darstellung eines Kondensators, dessen Elektroden zweischichtig ausgebildet sind;
- Figur 3:: eine stark vereinfachte Darstellung einer Schichtstruktur der ersten Elektrode und der zweiten Elektrode eines Kondensators eines Betriebsflüssigkeitsbehälters gemäß einer weiteren Ausführungsform der vorliegenden Erfindung;
- Figur 4:: eine stark vereinfachte räumliche Darstellung eines erfindungsgemäßen Betriebsflüssigkeitsbehälters gemäß einer weiteren Ausführungsform der vorliegenden Erfindung;
- Figur 5:: eine stark vereinfachte räumliche Darstellung eines erfindungsgemäßen Betriebsflüssigkeitsbehälters gemäß einer nochmals weiteren Ausführungsform der vorliegenden Erfindung, bei der der Kondensator in einem Stautopf des Betriebsflüssigkeitsbehälters angeordnet ist;
- Figur 6:: eine stark vereinfachte räumliche Darstellung eines erfindungsgemäßen Betriebsflüssigkeitsbehälters gemäß einer nochmals weiteren Ausführungsform der vorliegenden Erfindung, bei der der Kondensator Teil eines Einfüllrohrs des Betriebsflüssigkeitsbehälters ist; und
- Figur 7:: eine schematische Querschnittsdarstellung des Einfüllrohrs des in Figur 6, dargestellten Betriebsflüssigkeitsbehälters.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

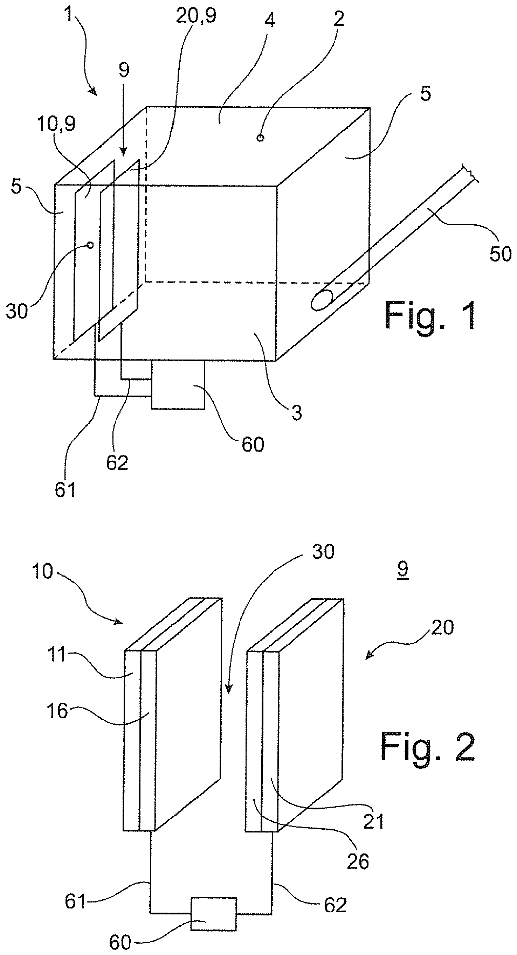

Figur 1 zeigt eine räumliche Darstellung eines stark vereinfachten erfindungsgemäßen Betriebsflüssigkeitsbehälters 1 gemäß einer ersten Ausführungsform der vorliegenden Erfindung. Der Betriebsflüssigkeitsbehälter 1 ist im vorliegenden Fall als Kraftstoffbehälter 1 ausgebildet. Jedoch ist die vorliegende Erfindung nicht darauf beschränkt, dass der Betriebsflüssigkeitsbehälter 1 als Kraftstoffbehälter 1 ausgebildet ist. Der Betriebsflüssigkeitsbehälters 1 kann auch als Harnstoffbehälter 1 zur Bevorratung von in einen Abgasstrang zu injizierenden Harnstoff, oder als Wasserbehälter 1 zur Bevorratung von in Brennräume einer Brennkraftmaschine zu injizierendes Wasser, oder als Wischwasserbehälter 1, oder als Ölbehälter 1, oder allgemein als Nebenflüssigkeitsbehälter 1 oder Additivbehälter 1 für Kraftfahrzeuge ausgebildet sein.

Ein Betriebsflüssigkeitsbehälterinnenraum 2 ist über ein in diesen mündendes Einfüllrohr 50 mit einer Betriebsflüssigkeit befüllbar. Der Betriebsflüssigkeitsbehälterinnenraum 2 ist durch Behälterwände 3, 4, 5 begrenzt. Bei dem stark vereinfachten und in Figur 1 dargestellten Betriebsflüssigkeitsbehälter 1 ist ein Behälterboden 3 über vier Seitenwände 4 mit einer Deckenwand 5 verbunden. Der erfindungsgemäße Betriebsflüssigkeitsbehälter 1 ist jedoch auf eine entsprechend einfach ausgebildete Geometrie nicht beschränkt. Beispielsweise kann der erfindungsgemäße Betriebsflüssigkeitsbehälter 1 eine Sattelform mit zwei oder mehr Betriebsflüssigkeitsbehälterinnenräumen aufweisen, die entweder miteinander fluidverbunden sind oder auch voneinander fluidgetrennt sein können. Beschränkungen hinsichtlich der geometrischen Ausgestaltung des Betriebsflüssigkeitsbehälters 1 bestehen erfindungsgemäß keine.

Wie aus Figur 1 ersichtlich ist, weist der Betriebsflüssigkeitsbehälter 1 einen Kondensator 9 auf, der wiederum eine erste Elektrode 10 und eine zweite Elektrode 20 aufweist. Zwischen der ersten Elektrode 10 und der zweiten Elektrode 20 ist ein Freiraum 30 gebildet, der mit dem Betriebsflüssigkeitsbehälterinnenraum 2 fluidverbunden ist. Sowohl die erste Elektrode 10 als auch die zweite Elektrode 20 sind über elektrische Verbindungen 61, 62 mit einer elektronischen Auswerteeinrichtung 60 elektrisch verbunden. Im Genaueren ist die erste Elektrode 10 über eine erste elektrische Verbindung 61 bzw. einen ersten Verbindungsdraht 61 mit der Auswerteeinrichtung 60 elektrisch verbunden, und die zweite Elektrode 20 ist über eine zweite elektrische Verbindung 62 bzw. über einen zweiten Verbindungsdraht 62 mit der Auswerteeinrichtung 60 elektrisch verbunden. Somit können Messinformationen bzw. Messdaten von den Elektroden 10, 20 an die Auswerteeinrichtung 60 übertragen werden.

Bei dem erfindungsgemäßen Betriebsflüssigkeitsbehälter 1 weisen die erste Elektrode 10 und die zweite Elektrode 20 einen elektrisch leitfähigen Kunststoff auf. Dies bedeutet, dass Teile der ersten Elektrode 10 und auch Teile der zweiten Elektrode 20 aus einem elektrisch leitfähigen Kunststoff bestehen. Die elektrische Leitfähigkeit der ersten Elektrode 10 und der zweiten Elektrode 20 wird dadurch realisiert, dass in dem Kunststoff elektrisch leitfähige Partikel dispergiert sind. Folglich ist der Kunststoff der ersten Elektrode 10 und der zweiten Elektrode 20 mit leitfähigen Partikeln gefüllt.

Bei den leitfähigen Partikeln kann es sich beispielsweise um Metallpulver handeln. Als Metall können insbesondere Eisen, Aluminium, Kupfer, Zinn, Zink, Nickel, Silber, Gold, Platin und Legierungen dieser Metalle, beispielsweise Messing, verwendet werden. Beschränkungen hinsichtlich der Auswahl des Metallmaterials bestehen erfindungsgemäß keine.

Eine weitere Möglichkeit, den Kunststoff der ersten Elektrode 10 und der zweiten Elektrode 20 elektrisch leitend auszugestalten, ist eine Dispergierung von leitfähigen Rußpartikeln in dem Kunststoffmaterial.

Bei dem Kunststoff, den die erste Elektrode 10 und die zweite Elektrode 20 aufweisen, kann es sich beispielsweise um Polyethylen hoher Dichte handeln. Ferner ist es auch möglich, dass der Kunststoff Polyoxymethylen aufweist. Ein weiterer Kunststoff, der für die Verwendung als erste Elektrode 10 und zweite Elektrode 20 geeignet ist, ist Polyamid. Hinsichtlich der Auswahl des Kunststoffmaterials für die erste Elektrode 10 und die zweite Elektrode 20 bestehen erfindungsgemäß keine Beschränkungen.

Aus Figur 1 ist ersichtlich, dass ein Teil der in Figur 1 links dargestellten Seitenwand 5 als erste Elektrode 10 ausgebildet ist. Die zweite Elektrode 20 ist mit dem Behälterboden 3 verbunden. Dabei ist die Verbindung zwischen der zweiten Elektrode 20 und dem Behälterboden 3 dergestalt, dass die zweite Elektrode 20 von dem Behälterboden 3 elektrisch getrennt ist, sodass ein Ladungsabtransport von der zweiten Elektrode 20 lediglich über die zweite elektrische Verbindung 62 ermöglicht ist. Selbiges gilt für die erste Elektrode 10. Die erste Elektrode 10 ist in deren Randbereich von der übrigen Seitenwand 5 elektrisch getrennt, sodass ein elektrischer Abtransport von Ladungen von der ersten Elektrode 10 lediglich über die erste elektrische Verbindung 61 ermöglicht ist.

In Figur 2 ist ein stark vereinfachter Kondensator 9 ohne den zugehörigen Betriebsflüssigkeitsbehälter 1 dargestellt. Bei dem in Figur 2 dargestellten Kondensator 9 ist sowohl die erste Elektrode 10 als auch die zweite Elektrode 20 mehrschichtig ausgebildet. Die erste Elektrode 10 weist dabei eine Elektroden-Schicht 16 und eine Außenschicht 11 auf. Die erste Elektroden-Schicht 16 ist dabei wie oben beschrieben aus einem Kunststoffmaterial gebildet, in dem leitfähige Partikel dispergiert sind. Die Außenschicht 11 besteht aus einem elektrisch nicht leitfähigen Kunststoff, so wie beispielsweise Polyethylen hoher Dichte oder Polyamid. Die zweite Elektrode 20 weist ebenfalls eine Elektroden-Schicht 26 und eine Außenschicht 21 auf. Die zweite Elektroden-Schicht 26 ist ebenfalls aus einem Kunststoffmaterial gebildet, in dem leitfähige Partikel dispergiert sind. Die Außenschicht 21 besteht aus einem elektrisch nicht leitfähigen Kunststoff, so wie beispielsweise Polyethylen hoher Dichte oder Polyamid. Die erste Elektroden-Schicht 16 und die zweite Elektroden-Schicht 26 begrenzen den Freiraum 30 des Kondensators 9. Auch aus Figur 2 ist ersichtlich, dass die erste Elektroden-Schicht 16 über die erste elektrische Verbindung 61 mit der Auswerteeinrichtung 60 und die zweite Elektroden-Schicht 26 über die zweite elektrische Verbindung 62 mit der Auswerteeinrichtung 60 verbunden sind.

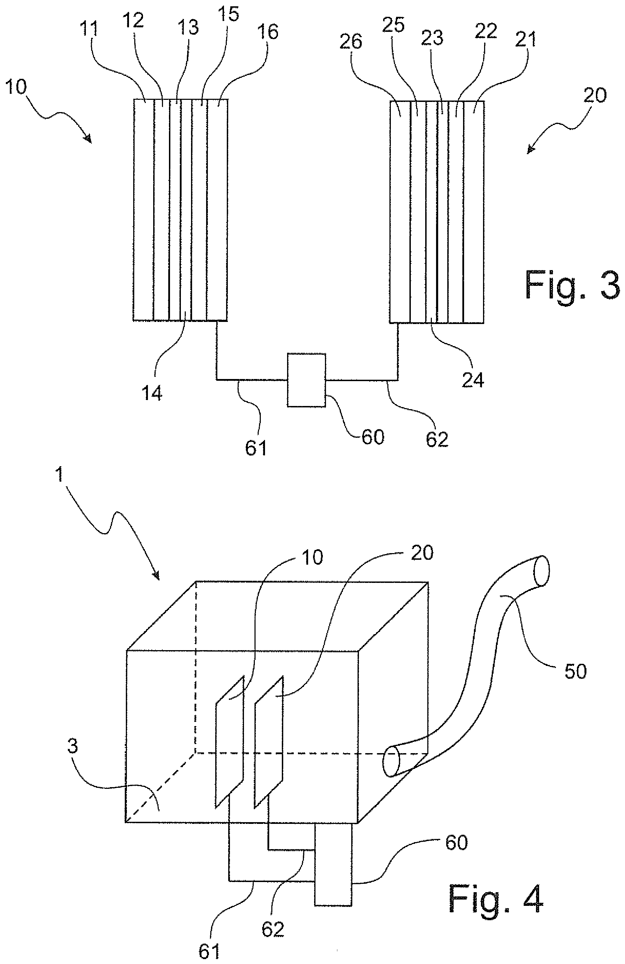

In Figur 3 sind eine erste Elektrode 10 und eine zweite Elektrode 20 eines Kondensators 9 in jeweiliger elektrischer Verbindung mit der Auswerteeinrichtung 60 dargestellt. Der Rest des Betriebsflüssigkeitsbehälters 1 ist in Figur 3 nicht dargestellt. Es ist ersichtlich, dass die erste Elektrode 10 eine Außenschicht 11, eine an die Außenschicht 11 angrenzende Rezyklat-Schicht 12, eine an die Rezyklat-Schicht 12 angrenzende erste Haftvermittlerschicht 13, eine an die erste Haftvermittlerschicht 13 angrenzende Barriereschicht 14, eine an die Barriereschicht 14 angrenzende zweite Haftvermittlerschicht 15 und die Elektroden-Schicht 16 aufweist. Dabei ist die Elektroden-Schicht 16 an die zweite Haftvermittlerschicht 15 angrenzend. Die Schichtstruktur der in Figur 3 dargestellten ersten Elektrode 10 entspricht der Schichtstruktur einer Behälterwand für ein Kraftstoffbehälter. Somit ist ersichtlich, dass die erste Elektrode 10 als Teil einer Behälterwand 3, 4, 5 ausgebildet sein kann.

Ferner ist aus Figur 3 ersichtlich, dass die zweite Elektrode 20 eine Außenschicht 21, eine an die Außenschicht 21 angrenzende Rezyklat-Schicht 22, eine an die Rezyklat-Schicht 22 angrenzende erste Haftvermittlerschicht 23, eine an die erste Haftvermittlerschicht 23 angrenzende Barriereschicht 24, eine an die Barriereschicht 24 angrenzende zweite Haftvermittlerschicht 25 und die Elektroden-Schicht 26 aufweist. Dabei ist die Elektroden-Schicht 26 an die zweite Haftvermittlerschicht 25 angrenzend. Die Schichtstruktur der in Figur 3 dargestellten zweiten Elektrode 20 entspricht der Schichtstruktur einer Behälterwand für ein Kraftstoffbehälter. Somit ist ersichtlich, dass die erste Elektrode 20 als Teil einer Behälterwand 3, 4, 5 ausgebildet sein kann.

Ferner ist aus Figur 3 ersichtlich, dass die Elektroden-Schicht 16 der ersten Elektrode 10 der Elektroden-Schicht 26 der zweiten Elektrode 20 gegenüberliegend angeordnet ist.

In Figur 4 ist ein Betriebsflüssigkeitsbehälter 1 gemäß einer weiteren Ausführungsform dargestellt. Der in Figur 4 dargestellte Betriebsflüssigkeitsbehälter 1 unterscheidet sich von dem in Figur 1 dargestellten Betriebsflüssigkeitsbehälter dadurch, dass die erste Elektrode 10 nicht als Teil der Seitenwand 5 ausgebildet ist. Es ist ersichtlich, dass sowohl die erste Elektrode 10 als auch die zweite Elektrode 20 mit dem Behälterboden 3 verbunden sind. Der übrige Aufbau des in Figur 4 dargestellten Betriebsflüssigkeitsbehälters 1 ist identisch mit dem Aufbau des in Figur 1 dargestellten Betriebsflüssigkeitsbehälters.

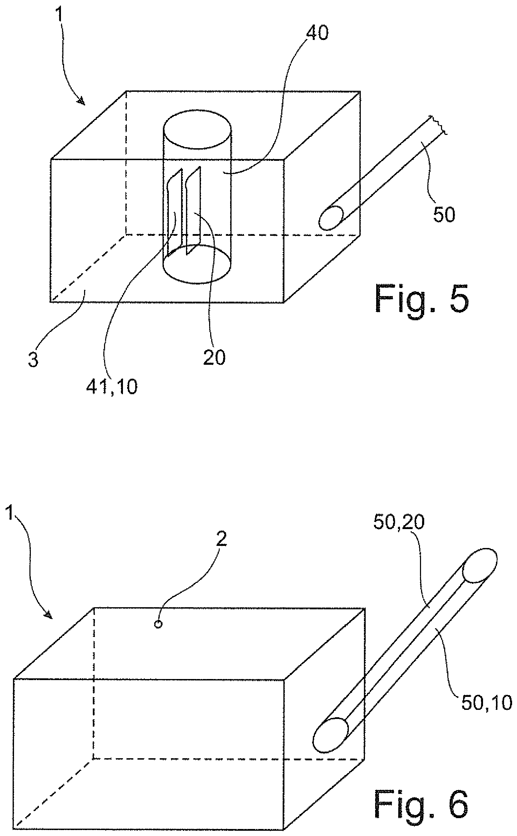

In Figur 5 ist ein Betriebsflüssigkeitsbehälter 1 gemäß einer nochmals weiteren Ausführungsform der vorliegenden Erfindung dargestellt. Der in Figur 5 dargestellte Betriebsflüssigkeitsbehälter 1 weist einen Stautopf 40 auf, innerhalb dessen Stauvolumen beispielsweise eine in Figur 5 nicht dargestellte Förderpumpe zum Fördern der Betriebsflüssigkeit angeordnet sein kann. Es ist ersichtlich, dass ein Teil einer Wand 41 des Stautopfes 40 als erste Elektrode 10 ausgebildet ist. Die zweite Elektrode 20 ist innerhalb des Stautopfes 40 angeordnet und in dem dargestellten Ausführungsbeispiel mit dem Behälterboden 3 verbunden. Auch der Stautopf 41 ist mit dem Behälterboden 3 des Betriebsflüssigkeitsbehälters 1 verbunden.

Obschon in Figur 5 nicht dargestellt, kann die gesamte Wand 41 des Stautopfes 40 als Kondensator ausgebildet sein. Dazu ist dann sowohl die erste Elektrode 10 als auch die zweite Elektrode 20 jeweils als Teilhohlzylinder 10, 20 ausgebildet, wobei Längskanten der Teilhohlzylinder 10, 20 miteinander nicht in elektrischen Kontakt stehen, sodass die erste Elektrode 10 von der zweiten Elektrode 20 elektrisch getrennt ist.

In Figur 6 ist ein Betriebsflüssigkeitsbehälter 1 gemäß einer nochmals weiteren Ausführungsform der vorliegenden Erfindung dargestellt. Bei dem in Figur 6 dargestellten Betriebsflüssigkeitsbehälter 1 ist das Einfüllrohr 50 als Kondensator 9 ausgebildet, wobei die erste Elektrode 10 als erster Teilhohlzylinder 10 und die zweite Elektrode 20 als zweiter Teilhohlzylinder 20 ausgebildet sind.

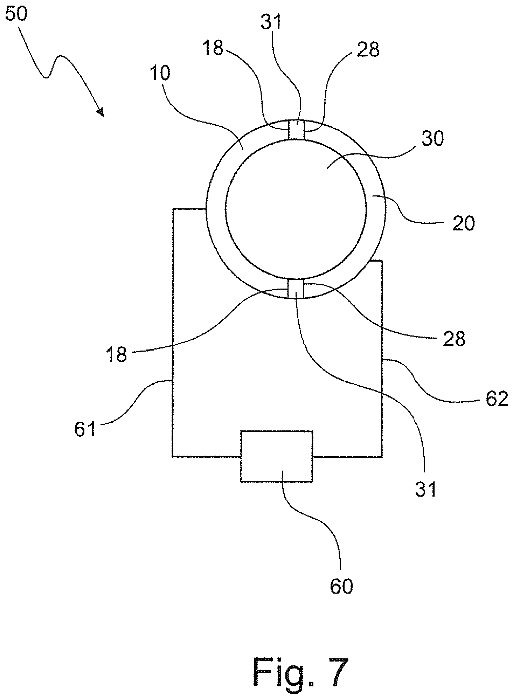

In Figur 7 ist das Einfüllrohr 50 des in Figur 6 dargestellten Betriebsflüssigkeitsbehälters 1 im Schnitt dargestellt. Es ist ersichtlich, dass der erste Teilhohlzylinder 10 über dessen Längskanten 18 mit Längskanten 28 des zweiten Teilhohlzylinders 20 unter Ausbildung des Freiraums 30 verbunden sind. Dabei ist der Freiraum 30 als Hohlraum 30 ausgebildet. Aus Figur 7 ist ersichtlich, dass zwischen den Längskanten 18 des ersten Teilhohlzylinders 10 und den Längskanten 28 des zweiten Teilhohlzylinders 20 jeweils ein elektrisch isolierender Kunststoff 31 angeordnet ist, sodass die erste Elektrode 10 von der zweiten Elektrode 20 elektrisch getrennt ist.

Obschon in Figur 6 nicht dargestellt, ist es möglich, dass in dem Einfüllrohr 6 mehrere Kondensatoren 9 entlang der Längserstreckungsrichtung des Einfüllrohrs 50 angeordnet sind.

### Bezugszeichenliste

- 1: Betriebsflüssigkeitsbehälter
- 2: Betriebsflüssigkeitsbehälterinnenraum
- 3: Bodenwand / Behälterwand (des Betriebsflüssigkeitsbehälters)
- 4: Deckenwand / Behälterwand (des Betriebsflüssigkeitsbehälters)
- 5: Seitenwand / Behälterwand (des Betriebsflüssigkeitsbehälters)
- 9: Kondensator
- 10: erste Elektrode / erster Teilhohlzylinder (des Kondensators)
- 11: Außenschicht (der ersten Elektrode)
- 12: Rezyklat-Schicht (der ersten Elektrode)
- 13: erste Haftvermittlerschicht (der ersten Elektrode)
- 14: Barriereschicht (der ersten Elektrode)
- 15: zweite Haftvermittlerschicht (der ersten Elektrode)
- 16: Elektroden-Schicht (der ersten Elektrode)
- 18: Längskante (des ersten Teilhohlzylinders)
- 20: zweite Elektrode / zweiter Teilhohlzylinder (des Kondensators)
- 21: Außenschicht (der zweiten Elektrode)
- 22: Rezyklat-Schicht (der zweiten Elektrode)
- 23: erste Haftvermittlerschicht (der zweiten Elektrode)
- 24: Barriereschicht (der zweiten Elektrode)
- 25: zweite Haftvermittlerschicht (der zweiten Elektrode)
- 26: Elektroden-Schicht (der zweiten Elektrode)
- 28: Längskante (des ersten Teilhohlzylinders)
- 30: Freiraum / Hohlraum (des Kondensators)
- 31: elektrisch isolierender Kunststoff
- 40: Stautopf
- 41: Wand (des Stautopfs)
- 50: Einfüllrohr
- 60: Auswerteeinrichtung
- 61: erste elektrische Verbindung / erster Verbindungsdraht
- 62: zweite elektrische Verbindung / zweiter Verbindungsdraht

## Patentansprüche

1. Betriebsflüssigkeitsbehälter (1) ausgeführt zur kapazitiven Bestimmung eines Füllstandes des Betriebsflüssigkeitsbehälters (1) mit
- einem Kondensator (9), der eine erste Elektrode (10) und eine zweite Elektrode (20) aufweist, wobei zwischen der ersten Elektrode (10) und der zweiten Elektrode (20) ein Freiraum (30) gebildet ist, der mit einem Betriebsflüssigkeitsbehälterinnenraum (2) fluidverbunden ist; und mit
- einer mit dem Kondensator (9) elektrisch verbundenen Auswerteeinrichtung (60) zur Bestimmung einer Kapazität des Kondensators (9) mittels von dem Kondensator (9) ermittelten Messsignalen, wobei die Kapazität des Kondensators (9) ein Maß für den Füllstand angibt, wobei
die erste Elektrode (10) und die zweite Elektrode (20) einen elektrisch leitfähigen Kunststoff aufweisen;
wobei
die erste Elektrode (10) mehrschichtig ausgebildet ist;
**dadurch gekennzeichnet, dass**
eine Elektroden-Schicht (16) der ersten Elektrode (10), die an den Freiraum (30) des Kondensators (9) grenzt, aus dem elektrisch leitfähigen Kunststoff gebildet ist.

2. Betriebsflüssigkeitsbehälter (1) nach Anspruch 1, **dadurch gekennzeichnet, dass** die erste Elektrode (10) und/oder die zweite Elektrode (20) einen Kunststoff aufweist beziehungsweise aufweisen, in dem elektrisch leitfähige Partikel dispergiert sind.

3. Betriebsflüssigkeitsbehälter (1) nach Anspruch 2 oder 3, **dadurch gekennzeichnet, dass** die elektrisch leitfähigen Partikel leitfähige Rußpartikel aufweisen.

4. Betriebsflüssigkeitsbehälter (1) nach Anspruch 2 oder 3, **dadurch gekennzeichnet, dass** der elektrisch leitfähige Kunststoff der ersten Elektrode (10) und/oder der zweiten Elektrode (20) Polyethylen hoher Dichte aufweist, in dem die elektrisch leitfähigen Partikel dispergiert sind.

5. Betriebsflüssigkeitsbehälter (1) nach einem der vorhergehenden Ansprüche, **dadurch gekennzeichnet, dass** die erste Elektrode (10) eine Außenschicht (11), eine an die Außenschicht (11) angrenzende Rezyklat-Schicht (12), eine an die Rezyklat-Schicht (12) angrenzende erste Haftvermittlerschicht (13), eine an die erste Haftvermittlerschicht (13) angrenzende Barriereschicht (14), eine an die Barriereschicht (14) angrenzende zweite Haftvermittlerschicht (15) und die Elektroden-Schicht (16) aufweist, wobei die Elektroden-Schicht (16) an die zweite Haftvermittlerschicht (15) angrenzt.

6. Betriebsflüssigkeitsbehälter (1) nach einem der vorhergehenden Ansprüchen, **gekennzeichnet durch** die folgenden Merkmale:
- die zweite Elektrode (20) ist mehrschichtig ausgebildet; und
- eine Elektroden-Schicht (26) der zweiten Elektrode (20), die an den Freiraum (30) des Kondensators (9) grenzt, ist aus dem elektrisch leitfähigen Kunststoff gebildet.

7. Betriebsflüssigkeitsbehälter (1) nach Anspruch 6, **dadurch gekennzeichnet, dass** die zweite Elektrode (20) eine Außenschicht (21), eine an die Außenschicht (21) angrenzende Rezyklat-Schicht (22), eine an die Rezyklat-Schicht (22) angrenzende erste Haftvermittlerschicht (23), eine an die erste Haftvermittlerschicht (23) angrenzende Barriereschicht (24), eine an die Barriereschicht (24) angrenzende zweite Haftvermittlerschicht (25) und die Elektrodenschicht (26) aufweist, wobei die Elektroden-Schicht (26) an die zweite Haftvermittlerschicht (25) angrenzt.

8. Betriebsflüssigkeitsbehälter (1) nach einem der vorhergehenden Ansprüchen, **dadurch gekennzeichnet, dass** der Kondensator (9) mit einer Behälterwand (3, 4, 5) des Betriebsflüssigkeitsbehälters (1) verbunden ist.

9. Betriebsflüssigkeitsbehälter (1) nach einem der vorhergehenden Ansprüchen, **dadurch gekennzeichnet, dass** zumindest ein Teil einer Behälterwand (3, 4, 5) des Betriebsflüssigkeitsbehälters (1) als erste Elektrode (10) und/oder als zweite Elektrode (20) ausgebildet ist.

10. Betriebsflüssigkeitsbehälter (1) nach Anspruch 8 oder 9, **dadurch gekennzeichnet, dass** die Behälterwand (3, 4, 5) eine Außenwand (3, 4, 5) ist und die erste Elektrode (10) und/oder die zweite Elektrode (20) dem Betriebsflüssigkeitsbehälterinnenraum (2) zugewandt ist.

11. Betriebsflüssigkeitsbehälter (1) nach einem der vorhergehenden Ansprüchen, **dadurch gekennzeichnet, dass** die erste Elektrode (10) als erster Teilhohlzylinder (10) und/oder die zweite Elektrode (20) als zweiter Teilhohlzylinder (20) ausgebildet ist/sind.

12. Betriebsflüssigkeitsbehälter (1) nach Anspruch 11, **gekennzeichnet durch**, die folgenden Merkmale:
- der erste Teilhohlzylinder (10) ist über dessen Längskanten (18) mit der zweiten Elektrode (20) unter Ausbildung des Freiraums (30) verbunden, wobei der Freiraum (30) als Hohlraum (30) ausgebildet ist; und
- der erste Teilhohlzylinder (10) ist mit der zweiten Elektrode (20) mittels eines elektrisch isolierenden Kunststoffs (31) verbunden.

13. Betriebsflüssigkeitsbehälter (1) nach einem der vorhergehenden Ansprüchen, **gekennzeichnet durch** die folgenden Merkmale:
- der Betriebsflüssigkeitsbehälter (1) weist einen mit dem Betriebsflüssigkeitsbehälterinnenraum (2) fluidverbundenen Stautopf (40) auf, der mit einer Behälterbodenwand (3) des Betriebsflüssigkeitsbehälters (1) verbunden ist;
- zumindest ein Teil einer Wand (41) des Stautopfes (41) ist als erste Elektrode (10) und/oder als zweite Elektrode (20) ausgebildet.

14. Betriebsflüssigkeitsbehälter (1) nach einem der vorhergehenden Ansprüchen, **gekennzeichnet durch** die folgenden Merkmale:
- der Betriebsflüssigkeitsbehälterinnenraum (2) ist über ein in diesen mündendes Einfüllrohr (50) mit Betriebsflüssigkeit befüllbar;
- das Einfüllrohr (50) ist als der Kondensator (9) ausgebildet, wobei die erste Elektrode (10) als erster Teilhohlzylinder (10) und die zweite Elektrode (20) als zweiter Teilhohlzylinder (20) ausgebildet sind;
- der erste Teilhohlzylinder (10) ist über dessen Längskanten (18) mit Längskanten (28) des zweiten Teilhohlzylinders (20) unter Ausbildung des Freiraums (30) verbunden, wobei der Freiraum (30) als Hohlraum (30) ausgebildet ist; und
- zwischen den Längskanten (18) des ersten Teilhohlzylinders (10) und den Längskanten (28) des zweiten Teilhohlzylinders (20) ist jeweils ein elektrisch isolierender Kunststoff (31) angeordnet.

15. Betriebsflüssigkeitsbehälter (1) nach einem der vorhergehenden Ansprüche, **dadurch gekennzeichnet, dass** der Kondensator (9) in einem Flüssigkeitsabscheider einer Entlüftungseinrichtung des Betriebsflüssigkeitsbehälters angeordnet ist, über die der Betriebsflüssigkeitsbehälterinnenraum (2) zumindest mittelbar mit der Atmosphäre fluidverbunden ist, so dass mittels des Kondensators (9) eine Betriebsflüssigkeit in dem Flüssigkeitsabscheider detektierbar ist.

## Claims

1. Operating fluid tank (1), adapted for a capacitive determination of a fill level of the operating fluid tank (1) with
- a capacitor (9) comprising a first electrode (10) and a second electrode (20), wherein between the first electrode (10) and the second electrode (20) a clearance (30) is formed which is fluid-connected to an operating fluid tank interior (2); and with
- an evaluator (60) electrically connected to the capacitor (9) for determining a capacity of the capacitor (9) by means of measurement signals determined by the capacitor (9), wherein the capacity of the capacitor (9) indicates a measurement of the fill level;
- wherein the first electrode (10) and the second electrode (20) comprise an electrically conductive plastic material;
- wherein the first electrode (10) is multi-layered, wherein the operating fluid tank (1) is **characterized in that**
- an electrode layer (16) of the first electrode (10), which adjoins the clearance (30) of the capacitor (9), is formed from the electrically conductive plastic material.

2. Operating fluid tank (1) according to claim 1, **characterized in that** the first electrode (10) and/or the second electrode (20) comprise a plastic material in which electrically conductive particles are dispersed.

3. Operating fluid tank (1) according to claim 2 or 3, **characterized in that** the electrically conductive particles comprise conductive soot particles.

4. Operating fluid tank (1) according to claim 2 or 3, **characterized in that** the first electrode (10) and/or the second electrode (20) comprise a high-density polyethylene plastic material in which the electrically conductive particles are dispersed.

5. Operating fluid tank (1) according to one of the preceding claims, **characterized in that** the first electrode (10) has an outer layer (11), a recyclate layer (12) adjacent to the outer layer (11), a first adhesion promoting layer (13) adjacent to the recyclate layer (12), a barrier layer (14) adjacent to the first adhesion promoting layer (13), a second adhesion promoting layer (15) and electrode layer (16) adjacent to the barrier layer (14), wherein the electrode layer (16) is adjacent to the second adhesion promoting layer (15).

6. Operating fluid tank (1) according to one of the preceding claims, **characterized by** the following features:
- the second electrode (20) is multi-layered; and
- an electrode layer (26) of the second electrode (20), which adjoins the clearance (30) of the capacitor (9), is formed from electrically conductive plastic material.

7. Operating fluid tank (1) according to claim 6, **characterized in that** the second electrode (20) has an outer layer (21), a recyclate layer (22) adjacent to the outer layer (21), a first adhesion promoting layer (23) adjacent to the recyclate layer (22), a barrier layer (24) adjacent to the first adhesion promoting layer (23), a second adhesion promoting layer (25) and the electrode layer (26) adjacent to the barrier layer (24), wherein the electrode layer (26) is adjacent to the second adhesion promoting layer (25).

8. Operating fluid tank (1) according to one of the preceding claims, **characterized in that** the capacitor (9) is connected to a tank wall (3, 4, 5) of the operating fluid tank (1).

9. Operating fluid tank (1) according to one of the preceding claims, **characterized in that** at least one part of a tank wall (3, 4, 5) of the operating fluid tank (1) forms the first electrode (10) and/or as the second electrode (20).

10. Operating fluid tank (1) according to claim 8 or 9, **characterized in that** the tank wall (3, 4, 5) is an exterior wall (3, 4, 5) and the first electrode (10) and/or the second electrode (20) face the operating fluid tank interior (2).

11. Operating fluid tank (1) according to one of the preceding claims, **characterized in that** the first electrode (10) forms a first partly hollow cylinder (10) and/or the second electrode (20) forms a second partly hollow cylinder (20).

12. Operating fluid tank (1) according to claim 11, **characterized by** the following features:
- the first partly hollow cylinder (10) is connected via its longitudinal edges (18) to the second electrode (20) to form the clearance (30), wherein the clearance (30) forms a cavity (30); and
- the first partly hollow cylinder (10) is connected to the second electrode (20) by means of an electrically insulating plastic material (31).

13. Operating fluid tank (1) according to one of the preceding claims, **characterized by** the following features:
- the operating fluid tank (1) has a reserve (40) fluid-connected connected to the operating fluid tank interior (2) which is connected to a tank base wall (3) of the operating fluid tank (1);
- at least one part of a wall (41) of the reserve (41) forms a first electrode (10) and/or a second electrode (20).

14. Operating fluid tank (1) according to one of the preceding claims, **characterized by** the following features:
- the operating fluid tank interior (2) can be filled with operating fluid by means of a filler tube (50) through an opening;
- the filler tube (50) forms the capacitor (9), wherein the first electrode (10) forms a first partly hollow cylinder (10) and the second electrode (20) forms a second partly hollow cylinder (20);
- the first partly hollow cylinder (10) is connected through its longitudinal edges (18) with the longitudinal edges (28) of the second partly hollow cylinder (20) to form the clearance (30), wherein the clearance (30) forms a cavity (30); and
- an electrically insulating plastic material (31) is arranged between the longitudinal edges (18) of the first partly hollow cylinder (10) and the longitudinal edges (28) of the second partly hollow cylinder (20).

15. Operating fluid tank (1) according to one of the preceding claims, **characterized in that** the capacitor (9) is arranged in a liquid separator of a venting device of the operating fluid tank via which the operating fluid tank interior (2) is at least indirectly fluid-connected to the atmosphere, so that an operating fluid in the liquid separator is detectable by means of the capacitor (9).

## Revendications

1. Réservoir de liquide de fonctionnement (1) conçu pour la détermination capacitive d'un niveau de remplissage du réservoir de liquide de fonctionnement (1), comportant
- un condensateur (9) qui présente une première électrode (10) et une seconde électrode (20), un espace libre (30) étant formé entre la première électrode (10) et la seconde électrode (20), lequel est relié fluidiquement à un espace intérieur (2) de réservoir de liquide de fonctionnement ; et comportant
- un dispositif d'évaluation (60) relié électriquement au condensateur (9) pour la détermination d'une capacité du condensateur (9) au moyen de signaux de mesure détectés par le condensateur (9), la capacité du condensateur (9) indiquant une mesure du niveau de remplissage,
la première électrode (10) et la seconde électrode (20) présentant un matériau synthétique électriquement conducteur ;
la première électrode (10) étant formée en plusieurs couches ;
**caractérisé en ce qu'**une couche d'électrode (16) de la première électrode (10) bordant l'espace libre (30) du condensateur (9) est formée à partir du matériau synthétique électriquement conducteur.

2. Réservoir de liquide de fonctionnement (1) selon la revendication 1, **caractérisé en ce que** la première électrode (10) et/ou la seconde électrode (20) présente(nt) un matériau synthétique dans lequel sont dispersées des particules électriquement conductrices.

3. Réservoir de liquide de fonctionnement (1) selon la revendication 2 ou 3, **caractérisé en ce que** les particules électriquement conductrices présentent des particules de suie conductrices.

4. Réservoir de liquide de fonctionnement (1) selon la revendication 2 ou 3, **caractérisé en ce que** le matériau synthétique électriquement conducteur de la première électrode (10) et/ou de la seconde électrode (20) présente du polyéthylène haute densité dans lequel sont dispersées les particules électriquement conductrices.

5. Réservoir de liquide de fonctionnement (1) selon l'une quelconque des revendications précédentes, **caractérisé en ce que** la première électrode (10) présente une couche externe (11), une couche de produits recyclés (12) attenante à la couche externe (11), une première couche de promoteur d'adhérence (13) attenante à la couche de produits recyclés (12), une couche barrière (14) attenante à la première couche de promoteur d'adhérence (13), une seconde couche de promoteur d'adhérence (15) attenante à la couche barrière (14) et la couche d'électrode (16), la couche d'électrode (16) étant attenante à la seconde couche de promoteur d'adhérence (15).

6. Réservoir de liquide de fonctionnement (1) selon l'une quelconque des revendications précédentes, **caractérisé par** les caractéristiques suivantes :
- la seconde électrode (20) est formée en plusieurs couches ; et
- une couche d'électrode (26) de la seconde électrode (20) bordant l'espace libre (30) du condensateur (9) est formée à partir du matériau synthétique électriquement conducteur.

7. Réservoir de liquide de fonctionnement (1) selon la revendication 6, **caractérisé en ce que** la seconde électrode (20) présente une couche externe (21), une couche de produits recyclés (22) attenante à la couche externe (21), une première couche de promoteur d'adhérence (23) attenante à la couche de produits recyclés (22), une couche barrière (24) attenante à la première couche de promoteur d'adhérence (23), une seconde couche de promoteur d'adhérence (25) attenante à la couche barrière (24) et la couche d'électrode (26), la couche d'électrode (26) étant attenante à la seconde couche de promoteur d'adhérence (25).

8. Réservoir de liquide de fonctionnement (1) selon l'une quelconque des revendications précédentes, **caractérisé en ce que** le condensateur (9) est relié à une paroi de réservoir (3, 4, 5) du réservoir de liquide de fonctionnement (1).

9. Réservoir de liquide de fonctionnement (1) selon l'une quelconque des revendications précédentes, **caractérisé en ce qu'**au moins une partie d'une paroi de réservoir (3, 4, 5) du réservoir de liquide de fonctionnement (1) est réalisée en tant que première électrode (10) et/ou en tant que seconde électrode (20).

10. Réservoir de liquide de fonctionnement (1) selon la revendication 8 ou 9, **caractérisé en ce que** la paroi de réservoir (3, 4, 5) est une paroi externe (3, 4, 5) et la première électrode (10) et/ou la seconde électrode (20) fait/font face à l'espace intérieur (2) de réservoir de liquide de fonctionnement.

11. Réservoir de liquide de fonctionnement (1) selon l'une quelconque des revendications précédentes, **caractérisé en ce que** la première électrode (10) est réalisée en tant que premier cylindre creux partiel (10) et/ou la seconde électrode (20) est réalisée en tant que second cylindre creux partiel (20).

12. Réservoir de liquide de fonctionnement (1) selon la revendication 11, **caractérisé par** les caractéristiques suivantes :
- le premier cylindre creux partiel (10) est relié à la seconde électrode (20) par l'intermédiaire de ses bords longitudinaux (18) pour former l'espace libre (30), l'espace libre (30) étant réalisé en tant qu'espace creux (30) ; et
- le premier cylindre creux partiel (10) est relié à la seconde électrode (20) au moyen d'un matériau synthétique électriquement isolant (31).

13. Réservoir de liquide de fonctionnement (1) selon l'une quelconque des revendications précédentes, **caractérisé par** les caractéristiques suivantes :
- le réservoir de liquide de fonctionnement (1) présente un pot d'accumulation (40) relié fluidiquement à l'espace intérieur (2) de réservoir de liquide de fonctionnement et relié à une paroi de fond de réservoir (3) du réservoir de liquide de fonctionnement (1) ;
- au moins une partie d'une paroi (41) du pot d'accumulation (41) est réalisée en tant que première électrode (10) et/ou en tant que seconde électrode (20).

14. Réservoir de liquide de fonctionnement (1) selon l'une quelconque des revendications précédentes, **caractérisé par** les caractéristiques suivantes :
- l'espace intérieur (2) de réservoir de liquide de fonctionnement peut être rempli par du liquide de fonctionnement par l'intermédiaire d'un tuyau de remplissage (50) débouchant dans celui-ci ;
- le tuyau de remplissage (50) est réalisé en tant que condensateur (9), la première électrode (10) étant réalisée en tant que premier cylindre creux partiel (10) et la seconde électrode (20) étant réalisée en tant que second cylindre creux partiel (20) ;
- le premier cylindre creux partiel (10) est relié à des bords longitudinaux (28) du second cylindre creux partiel (20) par l'intermédiaire de ses bords longitudinaux (18) pour former l'espace libre (30), l'espace libre (30) étant réalisé en tant qu'espace creux (30) ; et
- un matériau synthétique électriquement isolant (31) est disposé respectivement entre les bords longitudinaux (18) du premier cylindre creux partiel (10) et les bords longitudinaux (28) du second cylindre creux partiel (20).

15. Réservoir de liquide de fonctionnement (1) selon l'une quelconque des revendications précédentes, **caractérisé en ce que** le condensateur (9) est disposé dans un séparateur de liquide d'un dispositif de ventilation du réservoir de liquide de fonctionnement, par l'intermédiaire duquel dispositif de ventilation l'espace intérieur (2) de réservoir de liquide de fonctionnement est relié fluidiquement au moins indirectement à l'atmosphère, de sorte qu'un liquide de fonctionnement peut être détecté dans le séparateur de liquide au moyen du condensateur (9).
